# EUROPEAN PATENT APPLICATION

(11) **EP 4 215 552 A1**
(43) Date of publication of application: **26.07.2023**
(21) Application number: 21880003.5
(22) Date of filing: 08.10.2021
(51) Int. Cl.: C08F 8/04, B60C 1/00, C08F 240/00, C08L 21/00, C08L 57/00

(54) **HYDROGENATED PETROLEUM RESIN, RUBBER ADDITIVE, UNCROSSLINKED RUBBER COMPOSITION, CROSSLINKED RUBBER, AND TIRE**

(30) Priority: 12.10.2020 JP 2020171787
(71) Applicant: ENEOS Corporation, Chiyoda-ku Tokyo 100-8162 (JP)
(72) Inventor: UEDA, Naho, Tokyo 100-8162 (JP); URUSHIZAKO, Naoko, Tokyo 100-8162 (JP); KOBAYASHI, Masahide, Tokyo 100-8162 (JP); UCHIZAWA, Shotaro, Tokyo 100-8162 (JP); WAKABAYASHI, Hideaki, Tokyo 100-8162 (JP); AKIYAMA, Yoichi, Tokyo 100-8162 (JP)
(74) Representative: Grünecker Patent- und Rechtsanwälte PartG mbB
(86) International application number: PCT/JP2021/037399
(87) International publication number: WO 2022/080264

(57) **Abstract**

A hydrogenated petroleum resin that is a hydrogenation product of a C9 petroleum resin, in which a ratio (M₂/M₁) of a total number (M₂) of hydrogen atoms bound to an aromatic ring in the hydrogenated petroleum resin to a total number (M₁) of hydrogen atoms in the hydrogenated petroleum resin is 0.15 to 0.45.

## Description

### Technical Field

The present invention relates to a hydrogenated petroleum resin, a rubber additive, an uncrosslinked rubber composition, a crosslinked rubber and a tire.

### Background Art

Conventionally, various additives have been used as rubber additives for imparting various properties to rubber components.

For example, Patent Literature 1 discloses a rubber composition in which a hydrogenated resin, a low-molecular-weight modified conjugated diene-based polymer, and a reinforcing filler are incorporated into a rubber matrix containing a diene-based rubber and a high-molecular-weight modified conjugated diene-based polymer.

### Citation List

### Patent Literature

[Patent Literature 1] Japanese Unexamined Patent Application, First Publication No. 2011-88988

### Summary of Invention

### Technical Problem

Rubber additives are expected to impart more uniform and efficient properties when the rubber additives have good compatibility with rubber components.

Accordingly, an object of the present invention is to provide a hydrogenated petroleum resin having high compatibility with rubber components and good hue, and suitable as a rubber additive.

Moreover, in recent years, there has come to be strong demand for tires to have good rolling resistance characteristics from the viewpoint of improving fuel efficiency. On the other hand, tires are strongly required to have excellent wet grip performance from the viewpoint of safety. However, it is difficult to achieve both good rolling resistance characteristics and excellent wet grip performance.

Accordingly, an object of the present invention is to provide a hydrogenated petroleum resin capable of imparting good rolling resistance characteristics and excellent wet grip performance to crosslinked rubber. Further, an object of the present invention is to provide a rubber additive containing the hydrogenated petroleum resin, an uncrosslinked rubber composition containing the rubber additive, a crosslinked rubber obtained by crosslinking the uncrosslinked rubber composition, and a tire containing the crosslinked rubber in a tread portion.

### Solution to Problem

According to an aspect of the present invention, there is provided a hydrogenated petroleum resin that is a hydrogenation product of a C9 petroleum resin, in which a ratio (M₂/M₁) of a total number (M₂) of hydrogen atoms bound to an aromatic ring in the hydrogenated petroleum resin to a total number (M₁) of hydrogen atoms in the hydrogenated petroleum resin is 0.15 to 0.45.

According to the aspect, the ratio (M₂/M₁) may be 0.2 to 0.4.

According to the aspect, a softening point of the hydrogenated petroleum resin may be 70 to 200°C.

According to the aspect, an iodine value of the hydrogenated petroleum resin may be 20 or less.

According to another aspect of the present invention, there is provided a rubber additive containing the hydrogenated petroleum resin.

According to sill another aspect of the present invention, there is provided an uncrosslinked rubber composition containing a rubber component, the rubber additive, and a crosslinking agent.

According to sill another aspect of the present invention, there is provided a crosslinked rubber obtained by crosslinking the uncrosslinked rubber composition.

According to sill another aspect of the present invention, there is provided a tire containing the crosslinked rubber in a tread portion.

### Advantageous Effects of Invention

According to the present invention, a hydrogenated petroleum resin which has high compatibility and good hue is provided.

In addition, according to the present invention, a hydrogenated petroleum resin that can impart good rolling resistance characteristics and excellent wet grip performance to a crosslinked rubber is also provided. Furthermore, according to the present invention, a rubber additive containing the hydrogenated petroleum resin, an uncrosslinked rubber composition containing the rubber additive, a crosslinked rubber obtained by crosslinking the uncrosslinked rubber composition, and a tire containing the crosslinked rubber in a tread portion are provided.

### Description of Embodiments

Hereinafter, suitable embodiments of the present invention will be described in detail.

### <Hydrogenated petroleum resin>

A hydrogenated petroleum resin of the present embodiment is a hydrogenation product (also referred to as partially hydrogenated product) of a C9 petroleum resin. In the present embodiment, the ratio (M₂/M₁) of the total number (M₂) of hydrogen atoms bound to an aromatic ring in the hydrogenated petroleum resin to the total number (M₁) of hydrogen atoms in the hydrogenated petroleum resin is 0.15 to 0.45.

In the present specification, the ratio (M₂/M₁) is determined by ¹H-NMR spectrum of the hydrogenated petroleum resin. That is, the ratio (M₂/M₁) can also be the ratio (S₂/S₁) of the total peak area (S₂) of peaks indicating hydrogen atoms bound to an aromatic ring in the hydrogenated petroleum resin to the total peak area (S₁) of peaks indicating hydrogen atoms in the hydrogenated petroleum resin, in the ¹H-NMR spectrum of the hydrogenated petroleum resin.

The ratio (M₂/M₁) can also be an index representing the aromatic content (content proportion of aromatic rings) in the hydrogenated petroleum resin. That is, the hydrogenated petroleum resin of the present embodiment can be a hydrogenation product obtained by hydrogenating a C9 petroleum resin in a range where the ratio (M₂/M₁) is 0.15 to 0.45. In addition, the ratio in the C9 petroleum resin is normally approximately 0.45. That is, the hydrogenated petroleum resin in the present embodiment can be a hydrogenation product in which aromatic rings are left with purpose such that the ratio (M₂/M₁) is 0.15 or more.

In the hydrogenated petroleum resin of the present embodiment, the ethylenically unsaturated bonds that are the main cause of yellowing are removed by hydrogenation, and aromatic rings are left with purpose such that the ratio (M₂/M₁) is 0.15 or more. That is, the hydrogenated petroleum resin of the present embodiment sufficiently suppresses yellowing by hydrogenation of the ethylenically unsaturated bonds to obtain a good hue, and at the same time, obtains high compatibility due to the presence of aromatic ring.

In addition, the hydrogenated petroleum resin of the present embodiment can impart good rolling resistance characteristics and excellent wet grip performance to rubber materials. Therefore, the hydrogenated petroleum resin of the present embodiment can be suitably used as a rubber additive (more preferably as a tire rubber additive).

Regarding rolling resistance characteristics, it is known that the smaller the loss factor (tanδ) measured at a frequency of 10 Hz and around 60°C in the dynamic viscoelasticity test of rubber materials, the better the rolling resistance characteristics. On the other hand, regarding wet grip performance, it is known that the larger the loss factor (tanδ) measured at a frequency of 10 Hz and around 0°C in the dynamic viscoelasticity test of the rubber material, the better the wet grip performance.

Both rolling resistance characteristics and wet grip performance are characteristics related to hysteresis loss of rubber materials. Generally, increasing the hysteresis loss increases the grip force and improves the braking performance, but also increases the rolling resistance characteristics and worsens the fuel consumption. As described above, since grip performance and rolling resistance characteristics are in a conflicting relationship, it is difficult to satisfy having both good rolling resistance characteristics and excellent wet grip performance at the same time.

By adding the hydrogenated petroleum resin of the present embodiment to the rubber material, while the loss factor (tanδ) at high temperatures (for example, 60°C) in the dynamic viscoelasticity test is maintained to be low, the loss factor (tanδ) at low temperatures (for example, 0°C) can increase. Thus, it is possible to impart good rolling resistance characteristics and excellent wet grip performance to the rubber material.

The inventors of the present invention consider the mechanism for achieving the above effects to be as follows. Generally, the peak of the loss factor (tanδ) of rubber is in a temperature range lower than 0°C. It is known that the softening point of petroleum resin is usually higher than the glass transition temperature (Tg) of rubber. Therefore, by adding petroleum resin to the rubber material, the peak of the loss factor (tanδ) can be shifted to the high temperature side, and the loss factor (tanδ) around 0°C can be increased.

In general petroleum resin, the ethylenically unsaturated bonds in the petroleum resin react with the crosslinking agent, causing crosslinking between the rubber component and the petroleum resin, and ethylenically unsaturated bonds consume crosslinking agent, causing insufficient crosslinking of rubber components. Accordingly, it is considered that the peak shift of the loss factor (tanδ) becomes insufficient. On the other hand, in the present embodiment, since a hydrogenation product of a C9 petroleum resin is used, it is considered that the number of ethylenically unsaturated bonds is reduced by hydrogenation and these problems are less likely to occur, and the peak of the loss factor (tanδ) can be efficiently shifted to the high temperature side.

In addition, in the present embodiment, compatibility with the rubber component is improved by leaving sufficient aromatic rings in the hydrogenated petroleum resin. It is considered that this improvement in compatibility makes the peak of the loss factor (tanδ) sharper, and the loss factor (tanδ) around 60°C is kept low.

The hydrogenated petroleum resin of the present embodiment can also impart excellent dry grip performance to rubber materials. Since dry grip performance is a property required for sports tires, racing tires, and the like, the hydrogenated petroleum resin of the present embodiment can be suitably used as a rubber additive for sports tires, a rubber additive for racing tires, and the like.

In addition, in the dynamic viscoelasticity test of the rubber material, it is known that the larger the loss factor (tanδ) measured at a frequency of 10 Hz and around 20°C, the better the dry grip performance. By adding the hydrogenated petroleum resin of the present embodiment to the rubber material, while the loss factor (tanδ) at high temperatures (for example, 60°C) in the dynamic viscoelasticity test is maintained to be low, the loss factor (tanδ) at normal temperatures (for example, 20°C) can increase. Thus, it is possible to impart good rolling resistance characteristics and excellent dry grip performance to the rubber material.

Hereinafter, the hydrogenated petroleum resin (hereinafter also simply referred to as hydrogenated petroleum resin) of the present embodiment will be described in detail.

A hydrogenated petroleum resin is a hydrogenation product of a C9 petroleum resin. As described above, the hydrogenated petroleum resin is hydrogenation product hydrogenated such that the ratio (M₂/M₁) is 0.15 or more, and thus the hydrogenated petroleum resin can also be a partial hydrogenation product of a C9 petroleum resin.

The C9 petroleum resin may be obtained by solidifying a C9 fraction collected through pyrolysis or the like of a petroleum-derived raw material oil, and may be obtained by solidifying a mixture of the C9 fraction and other hydrocarbons (here, there is 90% by mass or more, and preferably 95% by mass or more of the C9 fraction). In addition, the C9 fraction is a fraction mainly containing hydrocarbons with 9 carbon atoms (for example, 60% by mass or more, and preferably 80% by mass or more), and the C9 fraction may further contain components other than hydrocarbons with 9 carbon atoms (for example, hydrocarbons with 8 or 10 carbon atoms (such as styrene, methylindene)).

The C9 fraction may be, for example, a C9 fraction collected during the pyrolysis of petroleum naphtha.

The C9 fraction may contain, for example, saturated and unsaturated components. Examples of saturated components include propylbenzene, methylethylbenzene, and indane. Examples of unsaturated components include styrene, methylstyrene, vinyltoluene, dicyclopentadiene, indene, and methylindene.

The method for manufacturing the C9 petroleum resin is not particularly limited, and the C9 petroleum resin may be manufactured by a known method. A C9 petroleum resin can be manufactured, for example, by the following method. First, polymerization is performed at a temperature of 0 to 60°C using 0.01 to 5 parts by mass of a Lewis acid catalyst with respect to 100 parts by mass of the C9 fraction. Next, 0.1 to 20 parts by mass of a basic substance is added to the reaction system, and a neutralization reaction is carried out at a temperature of 10 to 100°C. After the neutralization reaction, the mixture is washed with water if necessary, then 0.1 to 20 parts by mass of activated clay is added, and clay treatment is performed at a temperature of 10 to 100°C. After the clay treatment, the clay is filtered off and unreacted components are removed by distillation to obtain a C9 petroleum resin.

The ratio (M₄/M₃) of the total number (M₄) of hydrogen atoms bound to aromatic rings in the C9 petroleum resin to the total number (M₃) of hydrogen atoms in the C9 petroleum resin is not particularly limited, and the ratio (M₂/M₁) of the hydrogenated petroleum resin obtained after hydrogenation may be within the above range. The ratio (M₄/M₃) of the C9 petroleum resin may be, for example, 0.2 to 0.5, preferably 0.3 to 0.5, and more preferably 0.4 to 0.5.

In addition, the ratio (M₄/M₃) is determined by ¹H-NMR spectrum of the C9 petroleum resin. That is, the ratio (M₄/M₃) can also be the ratio (S₄/S₃) of the total peak area (S₄) of peaks indicating hydrogen atoms bound to an aromatic ring in the C9 petroleum resin to the total peak area (S₃) of peaks indicating hydrogen atoms in the C9 petroleum resin, in the ¹H-NMR spectrum of the C9 petroleum resin.

The softening point of the C9 petroleum resin may be, for example, 200°C or lower, and preferably 170°C or lower, and may be 160°C or lower, 150°C or lower, or 140°C or lower. In addition, the softening point of the C9 petroleum resin may be, for example, 70°C or higher, preferably 80°C or higher, and more preferably 90°C or higher. Accordingly, it becomes easier to obtain a hydrogenated petroleum resin having a suitable softening point, which will be described later. That is, the softening point of the C9 petroleum resin is, for example, 70 to 200°C, 70 to 170°C, 70 to 160°C, 70 to 150°C, 70 to 140°C, 80 to 200°C, 80 to 170°C, 80 to 160°C, 80 to 150°C, 80 to 140°C, 90 to 200°C, 90 to 170°C, 90 to 160°C, 90 to 150°C, or 90 to 140°C.

In addition, the softening point in the present specification means the value measured by the method based on ASTM D6090.

Although the iodine value of the C9 petroleum resin is not particularly limited, may be, for example, 25 or more, 30 or more, or 40 or more. Although the iodine value of the C9 petroleum resin is not particularly limited, the iodine value may be, for example, 100 or less, or 80 or less. That is, the iodine value of the C9 petroleum resin may be, for example, 25 to 100, 25 to 80, 30 to 100, 30 to 80, 40 to 100, or 40 to 80.

In addition, the iodine value in the present specification means the value measured based on JIS K0070:1992.

The method for hydrogenating the C9 petroleum resin is not particularly limited, and may be manufactured by a known method. For example, hydrogenation of a C9 petroleum resin may be carried out by bringing the C9 petroleum resin and a hydrogenation catalyst into contact with each other in the presence of molecular hydrogen.

The hydrogenation catalyst is not particularly limited, and may be, for example, a nickel-based catalyst, a palladium-based catalyst, a platinum-based catalyst, or the like.

Hydrogenation conditions are not particularly limited, and may be changed as appropriate to obtain a suitable ratio (M₂/M₁) and iodine value. The hydrogen pressure during hydrogenation may be, for example, 2 to 30 MPa, and the reaction temperature during hydrogenation may be, for example, 200 to 310°C.

The C9 petroleum resin may be dissolved in a solvent and brought into contact with the hydrogenation catalyst. Any solvent can be used as long as the solvent can dissolve the C9 petroleum resin and does not adversely affect hydrogenation. Examples of solvents that can be used include kerosene and methylcyclohexane. The solvents may be used alone or in combination of two or more.

The ratio (M₂/M₁) of the hydrogenated petroleum resin is 0.15 or more, preferably 0.17 or more, more preferably 0.19 or more, and still more preferably 0.2 or more. As a result, the compatibility with the resin is further improved, and the above-described effects are exhibited more remarkably. In addition, the ratio (M₂/M₁) of the hydrogenated petroleum resin is 0.45 or less, and may be 0.43 or less, 0.4 or less, or 0.38 or less. That is, the ratio (M₂/M₁) of the hydrogenated petroleum resin may be, for example, 0.15 to 0.45, 0.15 to 0.43, 0.15 to 0.4, 0.15 to 0.38, 0.17 to 0.45, 0.17 to 0.43, 0.17 to 0.4, 0.17 to 0.38, 0.19 to 0.45, 0.19 to 0.43, 0.19 to 0.4, 0.19 to 0.38, 0.2 to 0.45, 0.2 to 0.43, 0.2 to 0.4, or 0.2 to 0.38.

The iodine value of the hydrogenated petroleum resin is lower than the iodine value of the C9 petroleum resin. The ratio (I₂/I₁) of the iodine value (I₂) of the hydrogenated petroleum resin to the iodine value (I₁) of the C9 petroleum resin is, for example, 0.6 or less, preferably 0.5 or less, and more preferably 0.4 or less, and may be 0.

The iodine value of the hydrogenated petroleum resin is not particularly limited, and is, for example, 20 or less, preferably 18 or less, more preferably 17 or less, and still more preferably 16 or less, and may be 15 or less. As a result, adverse effects due to the presence of ethylenically unsaturated bonds are sufficiently suppressed, and the above-described effects are exhibited more remarkably. The lower limit of the iodine value of the hydrogenated petroleum resin is not particularly limited, and for example, the iodine value of the hydrogenated petroleum resin may be 0 or more, 1 or more, 2 or more, or 3 or more. That is, the iodine value of the hydrogenated petroleum resin may be, for example, 0 to 20, 0 to 18, 0 to 17, 0 to 16, 0 to 15, 1 to 20, 1 to 18, 1 to 17, 1 to 16, 1 to 15, 2 to 20, 2 to 18, 2 to 17, 2 to 16, 2 to 15, 3 to 20, 3 to 18, 3 to 17, 3 to 16, or 3 to 15. In addition, the iodine value of the hydrogenated petroleum resin can be regarded as an index indicating the amount of ethylenically unsaturated bonds in the hydrogenated petroleum resin. Examples of the ethylenically unsaturated bonds in the hydrogenated petroleum resin include the ethylenically unsaturated bonds that were not hydrogenated during hydrogenation, and the ethylenically unsaturated bonds generated by partially hydrogenating aromatic rings during hydrogenation.

The softening point of the hydrogenated petroleum resin may be, for example, 70°C or higher, preferably 80°C or higher, and more preferably 90°C or higher. When the softening point of the hydrogenated petroleum resin is high, the peak of the loss factor (tanδ) shifts to a higher temperature side, and it becomes easier to obtain better wet grip performance. In addition, the softening point of the hydrogenated petroleum resin may be, for example, 200°C or lower, and preferably 170°C or lower, and may be 160°C or lower, 150°C or lower, or 140°C or lower. When the softening point of the hydrogenated petroleum resin is low, the excessive peak shift of the loss factor (tanδ) is suppressed, and it becomes easier to obtain better rolling resistance characteristics. That is, the softening point of the hydrogenated petroleum resin is, for example, 70 to 200°C, 70 to 170°C, 70 to 160°C, 70 to 150°C, 70 to 140°C, 80 to 200°C, 80 to 170°C, 80 to 160°C, 80 to 150°C, 80 to 140°C, 90 to 200°C, 90 to 170°C, 90 to 160°C, 90 to 150°C, or 90 to 140°C.

The weight average molecular weight of the hydrogenated petroleum resin is not particularly limited, and may be, for example, 4000 or less, 3500 or less, or 3000 or less. When the weight average molecular weight of the hydrogenated petroleum resin is small, the softening point tends to be low. Moreover, the weight average molecular weight of the hydrogenated petroleum resin may be, for example, 700 or more and 1000 or more. When the weight average molecular weight of the hydrogenated petroleum resin is large, the softening point tends to be high. That is, the weight average molecular weight of the hydrogenated petroleum resin may be, for example, 700 to 4000, 700 to 3500, 700 to 3000, 1000 to 4000, 1000 to 3500, or 1000 to 3000.

In addition, the weight average molecular weight of hydrogenated petroleum resin means the value of standard polystyrene conversion measured by gel permeation chromatography (GPC).

The hydrogenated petroleum resin of the present embodiment can be suitably used for applications such as a rubber additive, a plastic additive, a film additive, and an adhesive.

### <Rubber Additive>

The rubber additive of the present embodiment contains the hydrogenated petroleum resin described above. The rubber additive of the present embodiment can impart good rolling resistance characteristics and excellent wet grip performance to rubber materials.

The rubber additive of the present embodiment may be an additive consisting only of a hydrogenated petroleum resin, or may be an additive containing a hydrogenated petroleum resin and other components. As other components, components known as rubber additives can be used without particular limitation. Examples of other components include each component that can be contained in the uncrosslinked rubber composition described later.

The amount of the rubber additive of the present embodiment added to the rubber component is not particularly limited, and the amount of the hydrogenated petroleum resin added to 100 parts by mass of the rubber component is preferably an amount within the suitable range described later.

The amount of the hydrogenated petroleum resin added is preferably 1 part by mass or more, and more preferably 3 parts by mass or more with respect to 100 parts by mass of the rubber component. Accordingly, the wet grip performance tends to further improve. In addition, the amount of the hydrogenated petroleum resin added may be, for example, 40 parts by mass or less, and preferably 30 parts by mass or less with respect to 100 parts by mass of the rubber component. Accordingly, the rubber elasticity tends to improve. That is, the amount of hydrogenated petroleum resin added may be, for example, 1 to 40 parts by mass, 1 to 30 parts by mass, 3 to 40 parts by mass, or 3 to 30 parts by mass with respect to 100 parts by mass of the rubber component.

### <Uncrosslinked rubber composition>

The uncrosslinked rubber composition according to the present embodiment contains a rubber component, the rubber additive described above, and a crosslinking agent. According to the crosslinked rubber obtained by crosslinking the above uncrosslinked rubber composition, for example, when used in the tread portion of a tire, good rolling resistance characteristics and excellent wet grip performance can be exhibited.

The rubber component is not particularly limited, and known ones can be used without particular limitations. As the rubber component, butadiene rubber (BR), styrene-butadiene rubber (SBR), and natural rubber (NR) are preferable from the viewpoints of strength, workability, price, and the like. The rubber component may be used alone or in combination of two or more.

The glass transition temperature (Tg) of the rubber component may be, for example, 0°C or lower, and preferably -20°C or lower. Further, the glass transition temperature (Tg) of the rubber component may be, for example, -120°C or higher, and preferably -100°C or higher. That is, Tg of the rubber component may be, for example, -120 to 0°C, -120 to -20°C, -100 to 0°C, or -100 to -20°C. In the present specification, the glass transition temperature of the rubber component refers to a value measured by differential scanning calorimetry (DSC).

As the crosslinking agent, those commonly used for crosslinking rubber can be used without particular limitation, and can be appropriately selected according to the rubber component. Examples of crosslinking agents include sulfur crosslinking agents (for example, sulfur, morpholine disulfide, alkylphenol disulfide, and the like), and organic peroxide crosslinking agents. The crosslinking agent may be used alone or in combination of two or more.

The content of the crosslinking agent is preferably 0.1 to 5 parts by mass, more preferably 0.5 to 3 parts by mass, and still more preferably 1 to 2 parts by mass with respect to 100 parts by mass of the rubber component. That is, the content of the crosslinking agent may be, for example, 0.1 to 5 parts by mass, 0.1 to 3 parts by mass, 0.1 to 2 parts by mass, 0.5 to 5 parts by mass, 0.5 to 3 parts by mass, 0.5 to 2 parts by mass, 1 to 5 parts by mass, 1 to 3 parts by mass, or 1 to 2 parts by mass with respect to 100 parts by mass of the rubber component.

The uncrosslinked rubber composition according to the present embodiment may further contain various reinforcing agents, fillers, rubber extender oils, softening agents and the like used in the field of the rubber industry. Each component may be used alone or in combination of two or more.

Examples of reinforcing agents include carbon black and silica.

Carbon black is suitably used as a reinforcing agent because carbon black can improve the wear resistance and rolling resistance characteristics of crosslinked rubber and prevent cracks and fissures due to ultraviolet rays (ultraviolet deterioration prevention). The type of carbon black is not particularly limited, and conventionally known carbon black can be used.

Physical properties such as particle size, pore volume, and specific surface area of carbon black are not particularly limited, and various carbon blacks conventionally used in the rubber industry can be appropriately used.

When carbon black is used, the content thereof is preferably 5 to 80 parts by mass, and more preferably 10 to 60 parts by mass with respect to 100 parts by mass of the rubber component. With such an incorporated amount, the crosslinked rubber obtained by crosslinking the uncrosslinked rubber composition can satisfactorily obtain the effect as a reinforcing agent.

Silica that has been conventionally used as a reinforcing agent for rubber can be used without particular limitation. Although the specific surface area of silica is not particularly limited, usually, the range of 40 to 600 m²/G, and preferably 70 to 300 m²/G can be used, and the primary particle diameter can be 10 to 1000 nm.

The incorporated amount of the silica is preferably 0.1 to 150 parts by mass, more preferably 10 to 130 parts by mass, and still more preferably 30 to 110 parts by mass with respect to 100 parts by mass of the rubber component.

A silane coupling agent may be incorporated into the uncrosslinked rubber composition for the purpose of incorporating silica. As the silane coupling agent, any known silane coupling agent can be used without particular limitation. The silane coupling agents may be used alone or in combination of two or more.

The amount of the silane coupling agent added can be appropriately changed depending on the desired incorporated amount of silica, but the amount is preferably 0.1 to 20 parts by mass with respect to 100 parts by mass of the rubber component.

As fillers, for example, mineral powders, carbonates, alumina hydrates and the like can be used.

As the rubber extender oil, conventionally used aromatic oils, naphthenic oils, paraffin oils, and the like can be used. The incorporated amount of the rubber extender oil is preferably 0 to 100 parts by mass with respect to 100 parts by mass of the rubber component.

Examples of softening agents include tall oil, vegetable oil, paraffinic oil, naphthenic oil, aromatic oil, and phthalic acid derivatives. The incorporated amount of the softening agent is preferably 0 to 50 parts by mass with respect to 100 parts by mass of the rubber component.

The uncrosslinked rubber composition according to the present embodiment contains various additives used in the field of the rubber industry, for example, one or more of antioxidants, crosslinking agents, vulcanization accelerators, vulcanization auxiliary agents, vulcanization retardants, peptizers, process oils, plasticizers and the like may be further contained as necessary. The incorporated amount of these additives is preferably 0.1 to 10 parts by mass with respect to 100 parts by mass of the rubber component.

The vulcanization accelerator and vulcanization auxiliary agents are not particularly limited, and can be appropriately selected and used according to the rubber component and crosslinking agent contained in the rubber composition. "Vulcanization" means crosslinking via at least one sulfur atom.

Examples of vulcanization accelerators include thiuram-based accelerators, thiazole-based accelerators, sulfenamide-based accelerators (for example, N-cyclohexyl-2-benzothiazylsulfenamide), guanidine-based accelerators (for example, diphenylguanidine), aldehyde-amine accelerators, and urea accelerators.

When incorporating these vulcanization accelerators, one type may be used alone, or two or more types may be used in combination. The incorporated amount of vulcanization accelerator is preferably 0.1 to 10 parts by mass with respect to 100 parts by mass of the rubber component.

Examples of vulcanization auxiliary agents include metal oxides (for example, zinc oxide), metal hydroxides, metal carbonates, fatty acids (for example, stearic acid), and fatty acid metal salts.

When incorporating these vulcanization auxiliary agents, one type may be used alone, or two or more types may be used in combination. The incorporated amount of vulcanization auxiliary agents is preferably 0.1 to 10 parts by mass with respect to 100 parts by mass of the rubber component.

The uncrosslinked rubber composition according to the present embodiment can be manufactured by applying a method generally used as a method for manufacturing an uncrosslinked rubber composition. For example, the uncrosslinked rubber composition can be manufactured by mixing each of the components described above using a kneader such as a Brabender, Banbury mixer, or roll mixer.

### <Crosslinked rubber>

The crosslinked rubber according to the present embodiment is formed by crosslinking the above-described uncrosslinked rubber composition. Such crosslinked rubbers are useful, for example, as rubber materials for tires. Specifically, for example, when the crosslinked rubber according to the present embodiment is used in the tread portion of a tire, good rolling resistance characteristics and excellent wet grip performance can be exhibited.

The crosslinked rubber according to the present embodiment can be manufactured using the uncrosslinked rubber composition by the same method as a method generally used as a method for crosslinking rubber. For example, it is possible to obtain a crosslinked rubber having a structure in which the uncrosslinked rubber composition is thermoformed and shaped to the desired shape and the rubber component is crosslinked.

The crosslinked rubber according to the present embodiment can be suitably used for various applications. For example, the crosslinked rubber can be suitably used for applications such as tires, adhesives, films, medical tapes, paints, inks, asphalt binders, cloths, waterproof agents, and printer resins, and can be used particularly suitably for tire use (in particular, application to the tire tread portion).

### <Tire>

The tire according to the present embodiment contains the crosslinked rubber described above.

The tire according to the present embodiment preferably contains the crosslinked rubber described above in the tread portion. Such a tire can remarkably exhibit good rolling resistance characteristics and excellent wet grip performance.

The tire according to the present embodiment may have the same configuration as conventionally known tires except that the above-described crosslinked rubber is applied to at least a part of the tire.

Although the suitable embodiments of the present invention have been described above, the present invention is not limited to the above embodiments. For example, the present invention may be a method of imparting good rolling resistance characteristics and excellent wet grip performance to a rubber material by adding the above-described rubber additive to the rubber component used in the tire. In this case, with conventional methods for improving rubber materials, it was difficult to achieve both good rolling resistance characteristics and excellent wet grip performance. However, although the rolling resistance characteristics have been declining with the improvement of wet grip performance, the method of the present invention can impart good rolling resistance characteristics and excellent wet grip performance to the rubber material.

### Examples

Next, the present invention will be described with reference to examples, but the present invention is not limited to these examples.

### (Manufacturing Example A1)

100 parts by mass of the C9 fraction shown in Table 1 obtained by cracking naphtha and 1.2 parts by mass of a boron trifluoride-based catalyst were charged into an autoclave, and cationic polymerization was performed for 1.5 hours, and a C9 petroleum resin A1 shown in Table 2 was obtained. In the C9 fraction, the composition of unsaturated components involved in the polymerization reaction was as shown in Table 1 below.

### (Manufacturing Examples A2 to A6)

Except for adjusting the polymerization time as shown in Table 2, cationic polymerization was carried out in the same manner as in Manufacturing Example 1 to obtain C9 petroleum resins A2 to A6 shown in Table 2.

**[Table 1]**

| C9 fraction | | Composition (% by mass) |
|---|---|---|
| Unsaturated components | Styrene | 0.3 |
| | Methylstyrene | 14.2 |
| | Vinyltoluene | 27.0 |
| | Dicyclopentadiene | 0.7 |
| | Indene | 5.6 |
| Other components | | 52.2 |
| Total | | 100.0 |

**[Table 2]**

| | C9 petroleum resin | | | | | |
|---|---|---|---|---|---|---|
| | A1 | A2 | A3 | A4 | A5 | A6 |
| Polymerization time (h) | 1.5 | 1.2 | 1 | 1.8 | 2 | 3 |
| Softening point (°C) | 125 | 105 | 90 | 130 | 140 | 165 |
| Ratio (M₄/M₃) | 0.45 | 0.41 | 0.39 | 0.40 | 0.40 | 0.41 |
| Iodine value (cgI₂/100g) | 41 | 35 | 32 | 32 | 30 | 36 |
| Color tone | C | C | C | C | C | C |

In addition, the color tone is visually evaluated as C when the coloration due to yellowing or the like is noticeable, and as A when the coloration due to yellowing or the like is hardly observed, and the results are shown in Table 2.

### (Example B1)

50 g of C9 petroleum resin A1, 110 g of diluent (methylcyclohexane), and 2 g of 0.5% platinum-supported catalyst were charged into a 0.2 liter autoclave, and hydrogen addition (hydrogenation) reaction was carried out at a hydrogen pressure of 3 MPaG at 250°C. The reaction solution was appropriately withdrawn, and the reaction was terminated when the iodine value reached a predetermined value. After completion of the reaction, the diluent was removed by distillation to obtain a hydrogenated petroleum resin B1. The obtained hydrogenated petroleum resin B1 had a softening point of 125°C, a ratio (M₂/M₁) of 0.33, and an iodine value of 13.

### (Example B2)

A hydrogenated petroleum resin B2 was obtained by carrying out the same reaction as in Example B1 except that the hydrogen pressure was changed to 15 MPaG. The obtained hydrogenated petroleum resin B2 had a softening point of 125°C, a ratio (M₂/M₁) of 0.20, and an iodine value of 10.

### (Example B3)

A hydrogenated petroleum resin B3 was obtained by carrying out the same reaction as in Example B1 except that the C9 petroleum resin A1 was changed to the C9 petroleum resin A2. The obtained hydrogenated petroleum resin B3 had a softening point of 105°C, a ratio (M₂/M₁) of 0.35, and an iodine value of 4.

### (Comparative Example b3)

The hydrogenated petroleum resin b3 was obtained by carrying out the same reaction as in Example B1 except that the C9 petroleum resin A1 was changed to the C9 petroleum resin A2, the catalyst was changed to nickel-synthetic silica alumina catalyst, the hydrogen pressure was changed to 20 MPaG, and the reaction temperature was changed to 280°C, respectively. The obtained hydrogenated petroleum resin b3 had a softening point of 105°C, a ratio (M₂/M₁) of 0.09, and an iodine value of 2.

**[Table 3]**

| | Example B 1 | Example B2 | Example B3 | Comparative Example b3 |
|---|---|---|---|---|
| Hydrogenated petroleum resin | B1 | B2 | B3 | b3 |
| Petroleum resin | A1 | A1 | A2 | A2 |
| Softening point (°C) | 125 | 125 | 105 | 105 |
| Ratio (M₂/M₁) | 0.33 | 0.2 | 0.35 | 0.09 |
| Iodine value (cgI₂/100g) | 13 | 10 | 4 | 2 |
| Color tone | A | A | A | A |
| MACP (°C) | -65 | -40 | -66 | -12 |
| XDCP (°C) | 26 | 35 | 25 | 46 |

### (Example B4)

A hydrogenated petroleum resin B4 was obtained by carrying out the same reaction as in Example B1 except that the C9 petroleum resin A1 was changed to the C9 petroleum resin A3 and the reaction temperature was changed to 300°C. The obtained hydrogenated petroleum resin B4 had a softening point of 90°C, a ratio (M₂/M₁) of 0.36, and an iodine value of 10.

### (Example B5)

A hydrogenated petroleum resin B5 was obtained by carrying out the same reaction as in Example B1 except that the C9 petroleum resin A1 was changed to the C9 petroleum resin A4 and the reaction temperature was changed to 300°C. The obtained hydrogenated petroleum resin B5 had a softening point of 130°C, a ratio (M₂/M₁) of 0.37, and an iodine value of 15.

### (Example B6)

A hydrogenated petroleum resin B6 was obtained by carrying out the same reaction as in Example B1 except that the C9 petroleum resin A1 was changed to the C9 petroleum resin A5 and the reaction temperature was changed to 300°C. The obtained hydrogenated petroleum resin B6 had a softening point of 140°C, a ratio (M₂/M₁) of 0.38, and an iodine value of 14.

### (Example B7)

A hydrogenated petroleum resin B7 was obtained by carrying out the same reaction as in Example B1 except that the C9 petroleum resin A1 was changed to the C9 petroleum resin A6. The obtained hydrogenated petroleum resin B7 had a softening point of 165°C, a ratio (M₂/M₁) of 0.38, and an iodine value of 10.

**[Table 4]**

| | Example B4 | Example B5 | Example B6 | Example B7 |
|---|---|---|---|---|
| Hydrogenated petroleum resin | B4 | B5 | B6 | B7 |
| Petroleum resin | A3 | A4 | A5 | A6 |
| Softening point (°C) | 90 | 130 | 140 | 165 |
| Ratio (M₂/M₁) | 0.36 | 0.37 | 0.38 | 0.38 |
| Iodine value (cgI₂/100g) | 10 | 15 | 14 | 10 |
| Color tone | A | A | A | A |
| MACP (°C) | -65 | -67 | -66 | -67 |
| XDCP (°C) | 30 | 25 | 26 | 28 |

In addition, the color tone is visually evaluated as C when the coloration due to yellowing or the like is noticeable, and as A when the coloration due to yellowing or the like is hardly observed, and the results are shown in Tables 3 and 4.

In addition, methylcyclohexane, aniline, cloud point measurement (MACP) and m-xylene, diacetone alcohol, cloud point measurement (XDCP) are values measured by the following methods.

### <MACP>

2 g of sample is heated and dissolved in a mixed solution of 6 ml of methylcyclohexane and 6 ml of aniline, the temperature is gradually lowered while checking the temperature with a thermometer, and the temperature at which the thermometer becomes cloudy and invisible is called MACP (°C).

In addition, MACP is a parameter indicating compatibility with polyolefin, and the lower the numerical value, the higher the compatibility.

### <XDCP>

2 g of sample is heated and dissolved in a mixed solution of 7 ml of m-xylene and 5 ml of diacetone alcohol, the temperature is gradually lowered while checking the temperature with a thermometer, and the temperature at which the thermometer becomes cloudy and invisible is called XDCP (°C).

In addition, XDCP is a parameter indicating compatibility with aromatic resins (such as polystyrene), and the lower the numerical value, the higher the compatibility.

### (Example C1)

Using the hydrogenated petroleum resin B1 of Example B1 as a rubber additive, the following tests were conducted.

### <Manufacturing of uncrosslinked rubber composition>

The components shown in Table 5 below were kneaded at the proportions shown in Table 5 to obtain an uncrosslinked rubber composition. For kneading, Labo Plastomill (manufactured by Toyo Seiki Seisaku-sho, Ltd.) and a roll machine (manufactured by Kneader Machinery Co., Ltd.) were used, and the kneading conditions were a starting temperature of 135°C, a rotation speed of 50 rpm, and a kneading time of 8 minutes.

**[Table 5]**

| Formulation A | Parts by mass |
|---|---|
| SBR (oil-extended product) | 70 |
| BR | 30 |
| Silica | 60 |
| Hydrogenated petroleum resin B 1 | 10 |
| Si69 | 4.8 |
| Oil (in oil-extended SBR) | 26 |
| NOCRAC 6C | 1.0 |
| Zinc oxide | 3.0 |
| Stearic acid | 1.0 |
| Sulfur | 1.0 |
| Nocceler D | 1.0 |
| Nocceler CZ | 2.3 |

The details of each component in Table 5 are as follows.

### [Rubber component]

· SBR: Tuffdene E-581 (product name), manufactured by Asahi Kasei Corporation, styrene-butadiene rubber. Tuffdene E-581 is an oil-extended product, the SBR values in Table 5 indicate the net incorporated amount of SBR contained in Tuffdene E-581, and the oil values in Table 5 indicate the net incorporated amount of oil contained in Tuffdene E-581.
· BR: Nipol BR1220 (product name), Zeon Corporation, butadiene rubber

### [Filling material]

· Silica: Nipsil AQ (product name), manufactured by Tosoh Corporation

### [Silane coupling agent]

· Si69: CABURUS-4 (product name), manufactured by Osaka Soda Co., Ltd.

### [Vulcanization accelerator]

· Nocceler D (product name): manufactured by Ouchi-Shinko Chemical Industrial Co., Ltd., diphenylguanidine
· Nocceler CZ (product name): manufactured by Ouchi-Shinko Chemical Industrial Co., Ltd., N-cyclohexyl-2-benzothiazole sulfenamide

### [Vulcanization auxiliary agent]

- Zinc oxide: manufactured by Hakusui Tech Co., Ltd.
- Stearic acid: manufactured by New Japan Chemical Co.,Ltd.

### [Antioxidant]

· NOCRAC 6C (product name): manufactured by Ouchi-Shinko Chemical Industrial Co., Ltd.

### [Crosslinking agent]

· Sulfur: HK200-5 (product name), manufactured by Hosoi Chemical Industry Co., Ltd.

### <Manufacturing of crosslinked rubber>

The uncrosslinked rubber composition obtained by kneading was thermoformed with a press machine (manufactured by Dumbbell Co., Ltd.) to prepare a sheet-like crosslinked rubber. The thermoforming conditions were 160°C and 30 minutes, and the thermoforming was carried out such that the thickness of the sheet was 1 mm.

### <Viscoelasticity measurement>

A sample having a size of 1 mm in thickness, 5 mm in width, and 30 mm in length was punched out from the prepared sheet-like crosslinked rubber. Next, a viscoelasticity measurement was performed using the punched sample. The conditions for the viscoelasticity measurement were as follows: a frequency 10 Hz, a strain 0.1%, and a temperature range of -40°C to 65°C, which increases at a rate of 3°C/min, and the measurement was performed in a tensile mode. The apparatus used is Rheogel-E4000 manufactured by UBM Co. Ltd. The results are shown in Table 5.

Here, the frequency is 10 Hz, but this is because the wet grip performance is correlated with the tanδ value at 10 Hz and 0°C when using the time-temperature conversion rule of viscoelasticity. It is known that the larger the numerical value, the better the wet grip performance. In addition, rolling resistance is similarly correlated with the tanδ value at 10 Hz and 60°C, and it is known that the smaller the numerical value, the better the rolling resistance characteristics.

### (Example C2)

Except that the hydrogenated petroleum resin B1 was changed to hydrogenated petroleum resin B2, manufacturing of an uncrosslinked rubber composition, manufacturing of a crosslinked rubber, and viscoelasticity measurement were carried out in the same manner as in Example C1. The results are shown in Table 6.

### (Comparative Example c1)

Except that the hydrogenated petroleum resin B1 was changed to the C9 petroleum resin A1, manufacturing of an uncrosslinked rubber composition, manufacturing of a crosslinked rubber, and viscoelasticity measurement were carried out in the same manner as in Example C1. The results are shown in Table 6.

**[Table 6]**

| | Example C1 | Example C2 | Comparative Example c1 |
|---|---|---|---|
| Resin type | B1 | B2 | A1 |
| Softening point (°C) | 125 | 125 | 125 |
| Ratio (M₂/M₁) | 0.33 | 0.20 | - |
| 0°C tanδ value | 0.470 | 0.458 | 0.430 |
| 60°C tanδ value | 0.118 | 0.120 | 0.130 |
| 0°C tanδ index | 109 | 107 | 100 |
| 60°C tanδ index | 91 | 92 | 100 |
| tanδ balance index | 120 | 115 | 100 |

In Table 6, the "0°C tanδ index" indicates a relative value when the "0°C tanδ value" of Comparative Example c1 is set to 100. In addition, in Table 6, the "60°C tanδ index" indicates a relative value when the "60°C tanδ value" of Comparative Example c1 is set to 100. Further, in Table 6, "tanδ balance index" indicates a relative value of the ratio of "0°C tanδ value" to "60°C tanδ value" when the value of Comparative Example c1 is set to 100.

### (Example D1)

Except that the hydrogenated petroleum resin B1 was changed to hydrogenated petroleum resin B3, manufacturing of an uncrosslinked rubber composition, manufacturing of a crosslinked rubber, and viscoelasticity measurement were carried out in the same manner as in Example C1. The results are shown in Table 7.

### (Comparative Example d1)

Except that the hydrogenated petroleum resin B1 was changed to hydrogenated petroleum resin b3, manufacturing of an uncrosslinked rubber composition, manufacturing of a crosslinked rubber, and viscoelasticity measurement were carried out in the same manner as in Example C1. The results are shown in Table 7.

### (Comparative Example d2)

Except that the hydrogenated petroleum resin B1 was changed to the C9 petroleum resin A2, manufacturing of an uncrosslinked rubber composition, manufacturing of a crosslinked rubber, and viscoelasticity measurement were carried out in the same manner as in Example C1. The results are shown in Table 7.

**[Table 7]**

| | Example D1 | Comparative Example d1 | Comparative Example d2 |
|---|---|---|---|
| Resin type | B3 | b3 | A2 |
| Softening point (°C) | 105 | 105 | 105 |
| Ratio (M₂/M₁) | 0.35 | 0.09 | - |
| 0°C tanδ value | 0.434 | 0.418 | 0.419 |
| 60°C tanδ value | 0.113 | 0.114 | 0.113 |
| 0°C tanδ index | 104 | 100 | 100 |
| 60°C tanδ index | 100 | 101 | 100 |
| tanδ balance index | 104 | 99 | 100 |

### (Example E1)

Except that the hydrogenated petroleum resin B1 was changed to hydrogenated petroleum resin B4, manufacturing of an uncrosslinked rubber composition, manufacturing of a crosslinked rubber, and viscoelasticity measurement were carried out in the same manner as in Example C1. The results are shown in Table 8.

### (Comparative Example e1)

Except that the hydrogenated petroleum resin B1 was changed to the C9 petroleum resin A3, manufacturing of an uncrosslinked rubber composition, manufacturing of a crosslinked rubber, and viscoelasticity measurement were carried out in the same manner as in Example C1. The results are shown in Table 8.

**[Table 8]**

| | Example E1 | Comparative Example e1 |
|---|---|---|
| Resin type | B4 | A3 |
| Softening point (°C) | 90 | 90 |
| Ratio (M₂/M₁) | 0.36 | - |
| 0°C tanδ value | 0.439 | 0.422 |
| 60°C tanδ value | 0.113 | 0.112 |
| 0°C tanδ index | 104 | 100 |
| 60°C tanδ index | 101 | 100 |
| tanδ balance index | 103 | 100 |

### (Example F1)

Except that the hydrogenated petroleum resin B1 was changed to hydrogenated petroleum resin B5, manufacturing of an uncrosslinked rubber composition, manufacturing of a crosslinked rubber, and viscoelasticity measurement were carried out in the same manner as in Example C1. The results are shown in Table 9.

### (Comparative Example fl)

Except that the hydrogenated petroleum resin B1 was changed to the C9 petroleum resin A4, manufacturing of an uncrosslinked rubber composition, manufacturing of a crosslinked rubber, and viscoelasticity measurement were carried out in the same manner as in Example C1. The results are shown in Table 9.

**[Table 9]**

| | Example F1 | Comparative Example f1 |
|---|---|---|
| Resin type | B5 | A4 |
| Softening point (°C) | 130 | 130 |
| Ratio (M₂/M₁) | 0.37 | - |
| 0°C tanδ value | 0.459 | 0.431 |
| 60°C tanδ value | 0.120 | 0.119 |
| 0°C tanδ index | 106 | 100 |
| 60°C tanδ index | 101 | 100 |
| tanδ balance index | 106 | 100 |

### (Example G1)

Except that the hydrogenated petroleum resin B1 was changed to hydrogenated petroleum resin B6, manufacturing of an uncrosslinked rubber composition, manufacturing of a crosslinked rubber, and viscoelasticity measurement were carried out in the same manner as in Example C1. The results are shown in Table 10.

### (Comparative Example g1)

Except that the hydrogenated petroleum resin B1 was changed to the C9 petroleum resin A5, manufacturing of an uncrosslinked rubber composition, manufacturing of a crosslinked rubber, and viscoelasticity measurement were carried out in the same manner as in Example C1. The results are shown in Table 10.

**[Table 10]**

| | Example G1 | Comparative Example g1 |
|---|---|---|
| Resin type | B6 | A5 |
| Softening point (°C) | 140 | 140 |
| Ratio (M₂/M₁) | 0.38 | - |
| 0°C tanδ value | 0.454 | 0.439 |
| 60°C tanδ value | 0.126 | 0.127 |
| 0°C tanδ index | 103 | 100 |
| 60°C tanδ index | 99 | 100 |
| tanδ balance index | 104 | 100 |

### (Example H1)

Except that the hydrogenated petroleum resin B1 was changed to hydrogenated petroleum resin B7, manufacturing of an uncrosslinked rubber composition, manufacturing of a crosslinked rubber, and viscoelasticity measurement were carried out in the same manner as in Example C1. The results are shown in Table 11.

### (Comparative Example h1)

Except that the hydrogenated petroleum resin B1 was changed to the C9 petroleum resin A6, manufacturing of an uncrosslinked rubber composition, manufacturing of a crosslinked rubber, and viscoelasticity measurement were carried out in the same manner as in Example C1. The results are shown in Table 11.

**[Table 11]**

| | Example H1 | Comparative Example h1 |
|---|---|---|
| Resin type | B7 | A6 |
| Softening point (°C) | 165 | 165 |
| Ratio (M₂/M₁) | 0.38 | - |
| 0°C tanδ value | 0.485 | 0.470 |
| 60°C tanδ value | 0.132 | 0.131 |
| 0°C tanδ index | 103 | 100 |
| 60°C tanδ index | 101 | 100 |
| tanδ balance index | 102 | 100 |

### (Example I1)

Except that the incorporating proportions at the time of manufacturing the uncrosslinked rubber composition were changed as shown in Table 12 below, manufacturing of an uncrosslinked rubber composition, manufacturing of a crosslinked rubber, and viscoelasticity measurement were carried out in the same manner as in Example C1. The results are shown in Table 13.

**[Table 12]**

| Formulation B | Parts by mass |
|---|---|
| SBR (oil-extended product) | 70 |
| BR | 30 |
| Silica | 60 |
| Hydrogenated petroleum resin B 1 | 20 |
| Si69 | 4.8 |
| Oil (in oil-extended SBR) | 26 |
| NOCRAC 6C | 1.0 |
| Zinc oxide | 3.0 |
| Stearic acid | 1.0 |
| Sulfur | 1.0 |
| Nocceler D | 1.0 |
| Nocceler CZ | 2.3 |

### (Comparative Example i1)

Except that the hydrogenated petroleum resin B1 was changed to the C9 petroleum resin A1, manufacturing of an uncrosslinked rubber composition, manufacturing of a crosslinked rubber, and viscoelasticity measurement were carried out in the same manner as in Example H1. The results are shown in Table 13.

**[Table 13]**

| | Example I1 | Comparative Example i1 |
|---|---|---|
| Resin type | B1 | A1 |
| Softening point (°C) | 125 | 125 |
| Ratio (M₂/M₁) | 0.33 | - |
| 0°C tanδ value | 0.616 | 0.610 |
| 60°C tanδ value | 0.134 | 0.136 |
| 0°C tanδ index | 101 | 100 |
| 60°C tanδ index | 99 | 100 |
| tanδ balance index | 102 | 100 |

### (Example J1)

Except that the incorporating proportions at the time of manufacturing the uncrosslinked rubber composition were changed to the formulation C shown in Table 14 below, the kneading start temperatures were respectively changed to 130°C, and the thermoforming conditions at the time of manufacturing the crosslinked rubber were changed to 170°C and 40 minutes, manufacturing of an uncrosslinked rubber composition, manufacturing of a crosslinked rubber, and viscoelasticity measurement were carried out in the same manner as in Example C1. The results are shown in Table 15.

**[Table 14]**

| Formulation C | Parts by mass |
|---|---|
| SBR (oil-extended product) | 100 |
| Silica | 100 |
| Hydrogenated petroleum resin B 1 | 10 |
| Si69 | 8.0 |
| Oil (in oil-extended SBR) | 38 |
| NOCRAC 6C | 1.0 |
| Zinc oxide | 3.0 |
| Stearic acid | 1.0 |
| Sulfur | 1.0 |
| Nocceler D | 1.0 |
| Nocceler CZ | 2.3 |

### (Comparative Example j1)

Except that the hydrogenated petroleum resin B1 was changed to the C9 petroleum resin A1, manufacturing of an uncrosslinked rubber composition, manufacturing of a crosslinked rubber, and viscoelasticity measurement were carried out in the same manner as in Example J1. The results are shown in Table 15.

**[Table 15]**

| | Example J1 | Comparative Example j1 |
|---|---|---|
| Resin type | B1 | A1 |
| Softening point (°C) | 125 | 125 |
| Ratio (M₂/M₁) | 0.33 | - |
| 0°C tanδ value | 0.354 | 0.346 |
| 60°C tanδ value | 0.165 | 0.164 |
| 0°C tanδ index | 102 | 100 |
| 60°C tanδ index | 101 | 100 |
| tanδ balance index | 102 | 100 |

Note that the formulation C in Table 14 is a formulation suitable for sports tires, racing tires, and the like, and the results of viscoelasticity measurement in Table 15 describe the tanδ value at 20°C. The tanδ value at 20°C correlates with the dry grip performance, which is important for sports tires, racing tires, and the like, and the larger the numerical value, the better the dry grip performance.

In Table 15, the "20°C tanδ index" indicates a relative value when the "20°C tanδ value" of Comparative Example j 1 is set to 100. In Table 15, the "60°C tanδ index" indicates a relative value when the "60°C tanδ value" of Comparative Example j1 is set to 100. Further, in Table 15, "tanδ balance index" indicates a relative value of the ratio of "20°C tanδ value" to "60°C tanδ value" when the value of Comparative Example j 1 is set to 100.

### (Example K1)

Except that the incorporating proportions at the time of manufacturing the uncrosslinked rubber composition were changed as shown in Table 16 below, manufacturing of an uncrosslinked rubber composition, manufacturing of a crosslinked rubber, and viscoelasticity measurement were carried out in the same manner as in Example J1. The results are shown in Table 17.

**[Table 16]**

| Formulation D | Parts by mass |
|---|---|
| SBR (oil-extended product) | 100 |
| Silica | 100 |
| Hydrogenated petroleum resin B 1 | 20 |
| Si69 | 8.0 |
| Oil (in oil-extended SBR) | 38 |
| NOCRAC 6C | 1.0 |
| Zinc oxide | 3.0 |
| Stearic acid | 1.0 |
| Sulfur | 1.0 |
| Nocceler D | 1.0 |
| Nocceler CZ | 2.3 |

### (Comparative Example k1)

Except that the hydrogenated petroleum resin B1 was changed to the C9 petroleum resin A1, manufacturing of an uncrosslinked rubber composition, manufacturing of a crosslinked rubber, and viscoelasticity measurement were carried out in the same manner as in Example K1. The results are shown in Table 17.

**[Table 17]**

| | Example K1 | Comparative Example k1 |
|---|---|---|
| Resin type | B1 | A1 |
| Softening point (°C) | 125 | 125 |
| Ratio (M₂/M₁) | 0.33 | - |
| 0°C tanδ value | 0.437 | 0.427 |
| 60°C tanδ value | 0.186 | 0.187 |
| 0°C tanδ index | 102 | 100 |
| 60°C tanδ index | 99 | 100 |
| tanδ balance index | 103 | 100 |

Note that the formulation D in Table 16 is a formulation suitable for sports tires, racing tires, and the like, and the results of viscoelasticity measurement in Table 17 describe the tanδ value at 20°C.

## Claims

1. A hydrogenated petroleum resin that is a hydrogenation product of a C9 petroleum resin, wherein
a ratio (M₂/M₁) of a total number (M₂) of hydrogen atoms bound to an aromatic ring in the hydrogenated petroleum resin to a total number (M₁) of hydrogen atoms in the hydrogenated petroleum resin is 0.15 to 0.45.

2. The hydrogenated petroleum resin according to claim 1, wherein
the ratio (M₂/M₁) is 0.2 to 0.4.

3. The hydrogenated petroleum resin according to claim 1 or 2, wherein
a softening point is 70 to 200°C.

4. The hydrogenated petroleum resin according to any one of claims 1 to 3, wherein
an iodine value is 20 or less.

5. A rubber additive containing the hydrogenated petroleum resin according to any one of claims 1 to 4.

6. An uncrosslinked rubber composition containing a rubber component, the rubber additive according to claim 5, and a crosslinking agent.

7. A crosslinked rubber obtained by crosslinking the uncrosslinked rubber composition according to claim 6.

8. A tire containing the crosslinked rubber according to claim 7 in a tread portion.
